# EUROPEAN PATENT APPLICATION

(11) **EP 4 759 760 A1**
(43) Date of publication of application: **17.06.2026**
(21) Application number: 24875907.8
(22) Date of filing: 06.02.2024
(51) Int. Cl.: B65G 47/90, B65G 43/08, H01M 10/04

(54) **BOXING DEVICE, DETECTION MECHANISM, BATTERY ASSEMBLY LINE, AND BOXING METHOD**

(30) Priority: 12.10.2023 CN 202311320874
(71) Applicant: Contemporary Amperex Technology Co., Limited, Ningde, Fujian 352100 (CN)
(72) Inventor: QIU, Shiping, Ningde, Fujian 352100 (CN); XIE, Yuming, Ningde, Fujian 352100 (CN); HUANG, Hua, Ningde, Fujian 352100 (CN); LIN, Jia, Ningde, Fujian 352100 (CN); LIU, Yang, Ningde, Fujian 352100 (CN); ZHAO, Bin, Ningde, Fujian 352100 (CN)
(74) Representative: Lorenz Seidler Gossel Part. mbB
(86) International application number: PCT/CN2024/076276
(87) International publication number: WO 2025/077077

(57) **Abstract**

A boxing device, a detection mechanism, a battery production line, and a boxing method. A boxing device (100) is configured to box a battery module. The boxing device includes a first conveying apparatus (10), a boxing channel (30), and a detection mechanism (20). The first conveying apparatus is configured to convey a battery module to move along a first direction. The boxing channel is arranged on a side of the first conveying apparatus. The battery module on the first conveying apparatus is movable to the boxing channel for boxing. The detection mechanism is configured to detect the battery module located in the boxing channel, to match the battery module with a box (200) of a battery.

## Description

### CROSS-REFERENCE TO RELATED APPLICATIONS

The present disclosure is proposed based on and claims priority to Chinese Patent Application No. 202311320874.0, entitled "BOXING DEVICE, DETECTION MECHANISM, BATTERY PRODUCTION LINE, AND BOXING METHOD" and filed on October 12, 2023, which is incorporated herein by reference in its entirety.

### TECHNICAL FIELD

The present disclosure relates to the field of battery technologies, and in particular, to a boxing device, a detection mechanism, a battery production line, and a boxing method.

### BACKGROUND

New energy batteries are increasingly widely used in life and industry. For example, new energy vehicles equipped with batteries have been widely used. In addition, batteries are also increasingly used in the energy storage field and the like.

During production and manufacturing of batteries, for example, during boxing of battery modules, a plurality of battery modules usually need to be boxed. During the boxing, the battery modules need to be placed into boxes of batteries by a manipulator. Sometimes, to manufacture batteries of different specifications, different battery modules need to be boxed. When a plurality of types of batteries are produced, it is prone to the problem of incorrect installation of the battery modules. Therefore, how to quickly and accurately perform boxing on a battery production line according to different battery production requirements is one of the research topics in the industry.

### SUMMARY

To resolve the foregoing technical problems, an objective of the present disclosure is to provide a boxing device, a detection mechanism, a battery production line, and a boxing method that can quickly and accurately box a battery module in an automated manner and have high compatibility.

The present disclosure is implemented through the following technical solutions.

According to a first aspect of the present disclosure, a boxing device is provided, configured to box a battery module, and including:
a first conveying apparatus, configured to convey a battery module to move along a first direction;
a boxing channel, arranged on a side of the first conveying apparatus, where the battery module on the first conveying apparatus is movable to the boxing channel for boxing; and
a detection mechanism, configured to detect the battery module located in the boxing channel, to match the battery module with a box of a battery.

The boxing device according to the embodiments of the present disclosure can quickly and accurately box a battery module in an automated manner, which saves labor costs and improves boxing efficiency. In addition, the detection mechanism is configured to detect the battery module located in the boxing channel, for example, an identification function can be implemented on the battery module before boxing, to match the battery module with the box of the battery, that is, to make the battery module correspond to the box of the battery, thereby avoiding the problem of incorrect installation of the battery module. Therefore, whether the battery module matches the box of the battery does not need to be manually confirmed, which is conducive to improving production efficiency and the degree of automation. In addition, the first conveying apparatus, the boxing channel, the detection mechanism, and the like may be configured to adapt to battery modules of different arrangement forms or types, thereby improving universality of the boxing device, and helping to suppress production costs.

In some embodiments, the boxing channel includes a first region and a second region that are arranged along a second direction, where the first region is configured to buffer the battery module, and the battery module is movable through the first region to the second region for boxing, and the detection mechanism is configured to detect the battery module located in the second region, where the first direction intersects the second direction.

The boxing channel includes a first region and a second region that are arranged along a second direction. The first region is, for example, a buffer region, and the second region is, for example, a boxing region. The first region is arranged close to the first conveying apparatus. In this way, a battery module on the first conveying apparatus can be moved to the first region and buffered in the first region. The second region is a side of the boxing channel away from the first conveying apparatus. Battery modules in the first region continuously enter the second region for boxing, and cooperate with each other in an action time sequence, so that the battery modules are quickly and accurately boxed in an automated manner, thereby improving a production pace.

In some embodiments, the detection mechanism includes a first detection unit, where the first detection unit is configured to detect an end plate of the battery module.

Shapes, positions, and/or sizes of holes that are on the end plate and that correspond to positive and negative terminals of the battery module may be set to be inconsistent. The shapes, positions, and/or sizes of the holes on the end plate of the battery module are detected by using the first detection unit, to make the battery module correspond to the box of the battery. That is, error-proofing and fool-proofing measures are taken on the battery module and the box, to avoid the problem of incorrect installation of the battery module, which is conducive to improving production efficiency.

In some embodiments, the first detection unit is configured to identify module information of the battery module.

In this way, the first detection unit is configured to identify module information of the battery module, to obtain the module information of the battery module, and it may be confirmed, according to the module information, whether the battery module corresponds to the box of the battery, to take error-proofing and fool-proofing measures on the battery module and the box.

In some embodiments, the detection mechanism includes a second detection unit, where the second detection unit is configured to perform distance measurement on the battery module.

A distance meter is configured to perform distance measurement on a battery core of the battery module, to ensure that flatness of the battery module falls within an acceptable range. In this way, standards, such as sizes, of battery modules of a battery pack can be kept as uniform as possible, to improve quality and performance of the battery pack.

In some embodiments, a plurality of boxing channels are provided, and the boxing channels are arranged along the first direction.

A plurality of the boxing channels are provided, and are arranged along the first direction. In this way, battery modules can be simultaneously boxed through the plurality of boxing channels, thereby improving production efficiency. The plurality of boxing channels may be configured for boxing battery modules of a same type, or may be configured for boxing battery modules of different types. In addition, when one of the boxing channels is abnormal, boxing may also be performed through other normal boxing channels, thereby improving reliability of the boxing device.

In some embodiments, the boxing channels include an automatic boxing channel and at least one manual boxing channel.

By setting the boxing channels to include an automatic boxing channel and at least one manual boxing channel, that is, by laying out both the automatic boxing channel and the manual boxing channel, when the boxing device or the automatic boxing channel is abnormal, it can be ensured, through the manual boxing channel, that the production line is not stopped even if the boxing device is shut down, thereby improving production efficiency, and a plurality of different modules may be boxed simultaneously.

In some embodiments, a plurality of detection mechanisms are provided, and the detection mechanisms are in a one-to-one correspondence with the boxing channels.

In this way, the detection mechanisms are in a one-to-one correspondence with the boxing channels, which is conducive to implementing compatibility with a plurality of types of battery modules, and completing module information verification and detection actions at a high pace.

In some embodiments, the boxing device further includes a boxing mechanism, where the boxing mechanism is configured to box a battery module that is qualified through detection.

By arranging a boxing mechanism, to implement precise positioning and clamping of the battery module, during boxing, precise boxing can be implemented, thereby simplifying a process of boxing a battery module, reducing labor costs, and improving accuracy and safety of boxing of a battery module.

According to a second aspect of the present disclosure, a detection mechanism is provided. The detection mechanism is used as a component of the foregoing boxing device, and the detection mechanism includes:
a mounting bracket;
a detection module, configured to detect a battery module; and
a motion mechanism, arranged on the mounting bracket, where the motion mechanism is configured to drive the detection module to move.

The detection mechanism can automatically detect the battery module through a controller, and the detection mechanism may be adjusted according to a requirement. The adjustment is simple, and the detection operation can be implemented for all battery modules of different sizes and forms, so that the automation degree of the boxing device is higher, and the production efficiency is higher.

In some embodiments, the motion mechanism includes a first motion component, a second motion component, and a third motion component, the first motion component is arranged on the mounting bracket, the first motion component is configured to drive the second motion component to move along a first direction, the second motion component is configured to drive the third motion component to move along a second direction, and the third motion component is configured to drive the detection module to move along a third direction, where the first direction, the second direction, and the third direction intersect each other.

The motion mechanism is equipped with the first motion component, the second motion component, and the third motion component. The first motion component is configured to drive the second motion component to move along the first direction, the second motion component is configured to drive the third motion component to move along the second direction, and the third motion component is configured to drive the detection module to move along the third direction. In this way, the detection module may be adjusted in a plurality of directions according to a requirement, to implement adjustment at various angles, thereby satisfying a detection requirement. Adjustment of the detection module is simple, and the detection operation can be implemented for all battery modules of different sizes and forms, so that the automation degree of the boxing device is higher, and the production efficiency is higher.

According to a third aspect of the present disclosure, a battery production line is provided. The battery production line includes at least one boxing device according to any one of the foregoing aspects.

The boxing device on the battery production line can quickly and accurately box a battery module in an automated manner, which saves labor costs and improves boxing efficiency. In addition, the detection mechanism is configured to detect the battery module located in the boxing channel, for example, an identification function can be implemented on the battery module before boxing, to match the battery module with the box of the battery, that is, to make the battery module correspond to the box of the battery, thereby avoiding the problem of incorrect installation of the battery module. Therefore, whether the battery module matches the box of the battery does not need to be manually confirmed, which is conducive to improving production efficiency and the degree of automation. In addition, the first conveying apparatus, the boxing channel, the detection mechanism, and the like may be configured to adapt to battery modules of different arrangement forms or types, thereby improving universality of the boxing device, and helping to suppress production costs.

According to a fourth aspect of the present disclosure, a boxing method is provided, for boxing a battery module. The boxing method includes:
controlling the battery module to move to a boxing channel;
detecting the battery module located in the boxing channel; and
performing boxing if the battery module is qualified.

Therefore, by using the boxing device, a battery module can be quickly and accurately boxed in an automated manner, which saves labor costs and improves boxing efficiency. In addition, the detection mechanism is configured to detect the battery module located in the boxing channel, for example, an identification function can be implemented on the battery module before boxing, to match the battery module with the box of the battery, that is, to make the battery module correspond to the box of the battery, thereby avoiding the problem of incorrect installation of the battery module. Therefore, whether the battery module matches the box of the battery does not need to be manually confirmed, which is conducive to improving production efficiency and the degree of automation. In addition, the first conveying apparatus, the boxing channel, the detection mechanism, and the like may be configured to adapt to battery modules of different arrangement forms or types, thereby improving universality of the boxing device, and helping to suppress production costs.

According to a fifth aspect of the present disclosure, a boxing method is provided, for boxing a battery module by using a boxing device, where the boxing device includes a first conveying apparatus, a boxing channel, and a detection mechanism, and the boxing method includes:
conveying, through the first conveying apparatus, the battery module to move along a first direction;
controlling the battery module on the first conveying apparatus to move to the boxing channel, where the boxing channel is located on a side of the first conveying apparatus;
detecting the battery module located in the boxing channel by using the detection mechanism; and
performing boxing if the battery module is qualified.

Therefore, by using the boxing device, a battery module can be quickly and accurately boxed in an automated manner, which saves labor costs and improves boxing efficiency. In addition, the detection mechanism is configured to detect the battery module located in the boxing channel, for example, an identification function can be implemented on the battery module before boxing, to match the battery module with the box of the battery, that is, to make the battery module correspond to the box of the battery, thereby avoiding the problem of incorrect installation of the battery module. Therefore, whether the battery module matches the box of the battery does not need to be manually confirmed, which is conducive to improving production efficiency and the degree of automation. In addition, the first conveying apparatus, the boxing channel, the detection mechanism, and the like may be configured to adapt to battery modules of different arrangement forms or types, thereby improving universality of the boxing device, and helping to suppress production costs.

In some embodiments, the boxing channel includes a first region and a second region that are arranged along a second direction, where the step of controlling the battery module on the first conveying apparatus to move to the boxing channel includes:
controlling the battery module on the first conveying apparatus to move to the first region, to buffer the battery module; and
controlling the battery module in the first region to move to the second region, for boxing.

The boxing channel is set to include a first region and a second region that are arranged along a second direction. The first region is, for example, a buffer region, and the second region is, for example, a boxing region. The first region is arranged close to the first conveying apparatus. In this way, a battery module on the first conveying apparatus can be moved to the first region and buffered in the first region. The second region is a side of the boxing channel away from the first conveying apparatus. Battery modules in the first region continuously enter the second region for boxing, and cooperate with each other in an action time sequence, so that the battery modules are quickly and accurately boxed in an automated manner, thereby improving a production pace.

In some embodiments, the detecting the battery module located in the boxing channel by using the detection mechanism includes:
detecting the battery module located in the second region by using the detection mechanism.

The second region is a side of the boxing channel away from the first conveying apparatus. Battery modules in the first region continuously enter the second region for boxing, and the battery modules located in the second region are detected through the detection mechanism and cooperate with each other in an action time sequence, so that the battery modules are quickly and accurately boxed in an automated manner, thereby improving a production pace.

In some embodiments, the detecting the battery module located in the boxing channel by using the detection mechanism includes:
detecting an end plate of the battery module by using the detection mechanism; and/or
identifying module information of the battery module by using the detection mechanism; and/or
performing distance measurement on the battery module by using the detection mechanism.

For example, shapes, positions, and/or sizes of holes that are on the end plate and that correspond to positive and negative terminals of the battery module may be set to be inconsistent. The shapes, positions, and/or sizes of the holes on the end plate of the battery module are detected by using the first detection unit, to make the battery module correspond to the box of the battery. That is, error-proofing and fool-proofing measures are taken on the battery module and the box, to avoid the problem of incorrect installation of the battery module, which is conducive to improving production efficiency.

In this way, the detection mechanism is configured to identify module information of the battery module, to obtain the module information of the battery module, and it may be confirmed, according to the module information, whether the battery module corresponds to the box of the battery, to take error-proofing and fool-proofing measures on the battery module and the box.

A distance meter is configured to perform distance measurement on a battery core of the battery module, to ensure that flatness of the battery module falls within an acceptable range. In this way, standards, such as sizes, of battery modules of a battery pack can be kept as uniform as possible, to improve quality and performance of the battery pack.

In some embodiments, the boxing device further includes a boxing mechanism, and the performing boxing includes: boxing, by using the boxing mechanism, the battery module that is qualified through detection.

By arranging a boxing mechanism, to implement precise positioning and clamping of the battery module, during boxing, precise boxing can be implemented, thereby simplifying a process of boxing a battery module, reducing labor costs, and improving accuracy and safety of boxing of a battery module.

### BRIEF DESCRIPTION OF THE DRAWINGS

By reading the following detailed description of exemplary implementations, a person of ordinary skill in the art becomes clearly aware of various other advantages and benefits. The accompanying drawings are merely used for illustrating the exemplary implementations and are not intended to constitute a limitation on the present disclosure. In addition, in all the accompanying drawings, same parts are indicated by same reference signs. In the accompanying drawings:
FIG. 1 is a schematic structural diagram of a boxing device according to some embodiments of the present disclosure;
FIG. 2 is a partial schematic diagram of the boxing device shown in FIG. 1;
FIG. 3 is a schematic structural diagram of a detection mechanism according to some embodiments of the present disclosure;
FIG. 4 is a partially enlarged view of a position A in FIG. 3;
FIG. 5 is a schematic method diagram of a boxing method according to some embodiments of the present disclosure; and
FIG. 6 is a schematic method diagram of a boxing method according to some other embodiments of the present disclosure.

### DESCRIPTION OF REFERENCE SIGNS

10. first conveying apparatus; 20. detection mechanism; 21. mounting bracket; 211. horizontal frame; 212. first longitudinal frame; 213. vertical frame; 214. second longitudinal frame; 22. motion mechanism; 221. first motion component; 2211. first slide rail; 2212. first slide table; 2213. first drive apparatus; 222. second motion component; 223. third motion component; 23. detection module; 231. first detection unit; 232. second detection unit; 30. boxing channel; 30a. first region; 30b. second region; 30c. automatic boxing channel; 30d. manual boxing channel; 40. boxing mechanism; 50. second conveying apparatus; 100. boxing device; 200. box.

### DETAILED DESCRIPTION

The following describes in detail the embodiments of technical solutions of the present disclosure with reference to the accompanying drawings. The following embodiments are merely used to describe technical solutions of the present disclosure more explicitly, and therefore they are merely used as examples and do not constitute a limitation to the protection scope of the present disclosure.

Unless otherwise defined, meanings of all technical and scientific terms used in this specification are the same as those usually understood by a person skilled in the art to which the present disclosure belongs. The terms used herein are merely for the purpose of describing specific embodiments, but are not intended to limit the present disclosure. The terms "include", "have", and any variations thereof in the present disclosure are intended to indicate non-exclusive inclusion.

In descriptions of embodiments of the present disclosure, the terms "first", "second", "third", and the like are merely intended to distinguish between different objects, and shall not be understood as an indication or implication of relative importance or implicit indication of the number, specific sequence or dominant-subordinate relationship of indicated technical features. In the descriptions of embodiments of the present disclosure, "a plurality of" means at least two unless otherwise specifically stated.

The "embodiment" mentioned in the specification means that particular features, structures, or characteristics described with reference to the embodiment may be included in at least one embodiment of the present disclosure. The phrase appearing at various positions in this specification may neither necessarily mean a same embodiment, nor mean an independent or optional embodiment exclusive from another embodiment. It is explicitly and implicitly understood by a person skilled in the art that embodiments described in the specification may be combined with another embodiment.

In the descriptions of embodiments of the present disclosure, the term "and/or" describes only an association relationship for describing associated objects and represents that three relationships may exist. For example, A and/or B may represent the following three cases: A alone, both A and B, and B alone. In addition, the character "/" in this specification generally indicates an "or" relationship between the associated objects.

In the descriptions of the embodiments of the present disclosure, the orientations or positional relationships indicated by the technical terms "length", "width", "thickness", "upper", "lower", "front", "rear", "left", "right", "vertical", "horizontal", "top", "bottom", "inside", "outside", "circumferential", "height direction", "first direction", "second direction", "third direction", and the like are based on the orientations or positional relationships shown in the accompanying drawings, are merely intended to help the descriptions of the embodiments of the present disclosure and simplify the descriptions, are not intended to indicate or imply that the apparatuses or components mentioned in the present disclosure need to have specific orientations, or be constructed, operated, or used for a specific orientation, and therefore shall not be construed as a limitation to embodiments of the present disclosure.

In the description of the embodiments of the present disclosure, unless otherwise explicitly specified and defined, the technical terms such as "install", "couple", "connect", and "fix" should be understood in a broad sense, for example, they may be a fixed connection, a detachable connection, or an integrated connection; may be a mechanical connection or an electric connection; or may be a mechanical connection or an electrical connection; or the connection may be a direct connection, an indirect connection through an intermediate medium, internal communication between two components, or an interaction relationship between two components. A person of ordinary skill in the art can understand specific meanings of the terms in the embodiments of the present disclosure based on specific situations.

In the descriptions of the embodiments of the present disclosure, unless otherwise clearly specified and defined, the technical term "contact" should be understood in a broad sense, and may be direct contact, contact through an intermediate medium layer, contact with essentially no interaction force between the two in contact, or contact with an interaction force between the two in contact.

The present disclosure is described below in detail.

Currently, new energy batteries are increasingly widely used in life and industry. New energy batteries are not only used in energy storage power systems such as hydro, thermal, wind, and solar power stations, but also widely used in electric means of transport such as electric bicycles, electric motorcycles, and electric vehicles, and used in many other fields such as military equipment and aerospace. With continuously increasing application of the power batteries, the market demand is also constantly expanding.

In the present disclosure, a battery refers to a physical module including one or more cells (also referred to as battery cores sometimes) to provide electric energy. For example, the battery provided in the present disclosure may include a battery module, a battery pack, or the like. The battery generally includes a box for packaging one or more cells. The box can prevent a liquid or other foreign matter from affecting the charging or discharging of the cells.

A cell refers to a basic unit that can implement mutual conversion between chemical energy and electric energy, and may be used for producing a battery module or a battery pack, to supply power to an electric device. The cell may be a secondary battery. A secondary battery refers to a cell that can be recharged to activate active materials and continue to be used after the cell is discharged. The cell may be a lithium ion battery, a sodium ion battery, a sodium lithium ion battery, a lithium metal battery, a sodium metal battery, a lithium sulfur battery, a magnesium ion battery, a nickel hydrogen battery, a nickel cadmium battery, a lead storage battery, or the like, which is not limited in the embodiments of the present disclosure.

In some battery packaging technologies, a plurality of cells (also referred to battery cores sometimes) are first integrated into a battery module or a battery module, and then, the battery module or battery module is packaged in a box of a battery to form a battery pack. However, in some other battery packaging technologies, a plurality of cells may be directly installed in a box of a battery to form a battery pack. Such a battery packaging technology may also be referred to as a cell-to-battery pack packaging technology. That is, during battery packing, a plurality of cells can directly be combined into a battery, or can be combined into a battery module or a battery module first, and then, battery modules or battery modules are combined into a battery. The battery is then arranged in an electric device to provide electrical energy for the electric device.

A box of a battery in the embodiment of the present disclosure is configured to accommodate a plurality of battery modules, a bus component and other components of the battery. In some embodiments, a structure, such as a beam, for fixing the battery modules may be further arranged in the box. The shape of the box can be determined according to the accommodated plurality of battery modules. In some embodiments, the box may be in a square shape and have six walls

To meet different product requirements, a battery manufacturer usually needs to manufacture battery products with various specifications. Therefore, there are various forms of grouping batteries, for example, single-row grouping of cells (also referred to as a "single-row module" sometimes). Two or more cells are bonded together to form a battery unit, and a plurality of battery units are arranged into forms of groups (also referred to as a "double-row module" or "multi-row module" sometimes). To improve production efficiency, a battery module or a battery module is sometimes installed into a box of a battery according to a designed battery boxing procedure. However, currently, in a process of performing a boxing operation on a battery module or a battery module, there is no error-proofing or fool-proofing measure, that is, there is no identification function for the battery module or the battery module before boxing. This is prone to a problem of incorrect installation of the battery module, which requires to shut down a boxing device or even a production line, to perform part replacement, processing parameter resetting, and the like, which is troublesome in terms of operation, is time-consuming and labor-intensive, is not conducive to improving a production automation degree, and is not conducive to improving production efficiency. In addition, it is necessary to prepare a boxing device or even a production line and the like adapted to battery modules of different arrangement forms or types, resulting in a low universality degree, which is not conducive to suppressing production costs.

To resolve the problems existing in the related art, the present disclosure provides a boxing device. The boxing device is configured to box a battery module. The boxing device includes a first conveying apparatus, a boxing channel, and a detection mechanism. The first conveying apparatus is configured to convey a battery module to move along a first direction. The boxing channel is arranged on a side of the first conveying apparatus. The battery module on the first conveying apparatus is movable to the boxing channel for boxing. The detection mechanism is configured to detect the battery module located in the boxing channel, to match the battery module with a box of a battery.

The boxing device according to the embodiments of the present disclosure can quickly and accurately box a battery module in an automated manner, which saves labor costs and improves boxing efficiency. In addition, the detection mechanism is configured to detect the battery module located in the boxing channel, for example, an identification function can be implemented on the battery module before boxing, to match the battery module with the box of the battery, that is, to make the battery module correspond to the box of the battery, thereby avoiding the problem of incorrect installation of the battery module. Therefore, whether the battery module matches the box of the battery does not need to be manually confirmed, which is conducive to improving production efficiency and the degree of automation. In addition, the first conveying apparatus, the boxing channel, the detection mechanism, and the like may be configured to adapt to battery modules of different arrangement forms or types, thereby improving universality of the boxing device, and helping to suppress production costs.

In a process of using the boxing device according to the embodiments of the present disclosure in production and manufacturing of batteries, for example, during boxing of battery modules, a plurality of battery modules usually need to be boxed. During the boxing, the battery modules need to be placed into boxes of batteries by a manipulator.

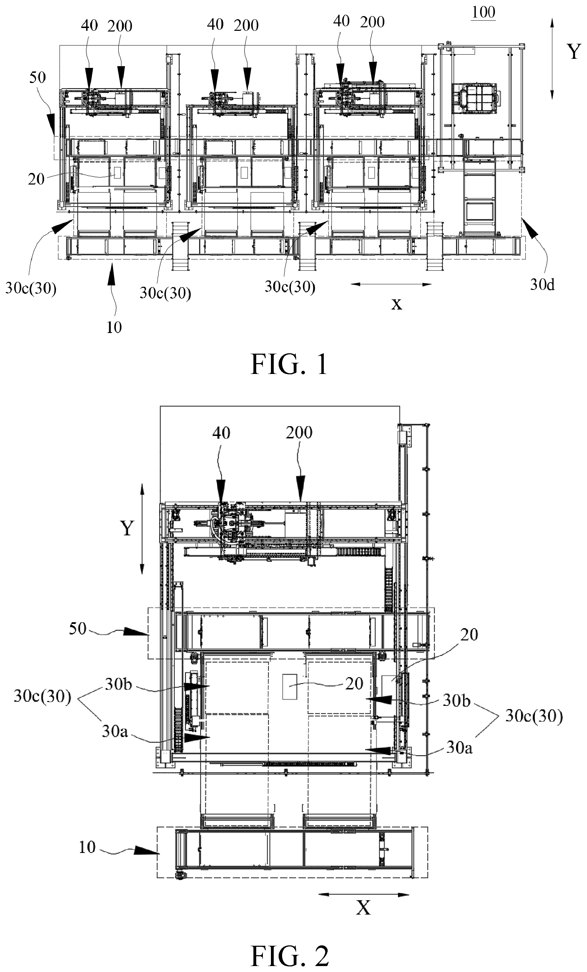

Some embodiments of the present disclosure are described below in detail with reference to FIG. 1 to FIG. 6.

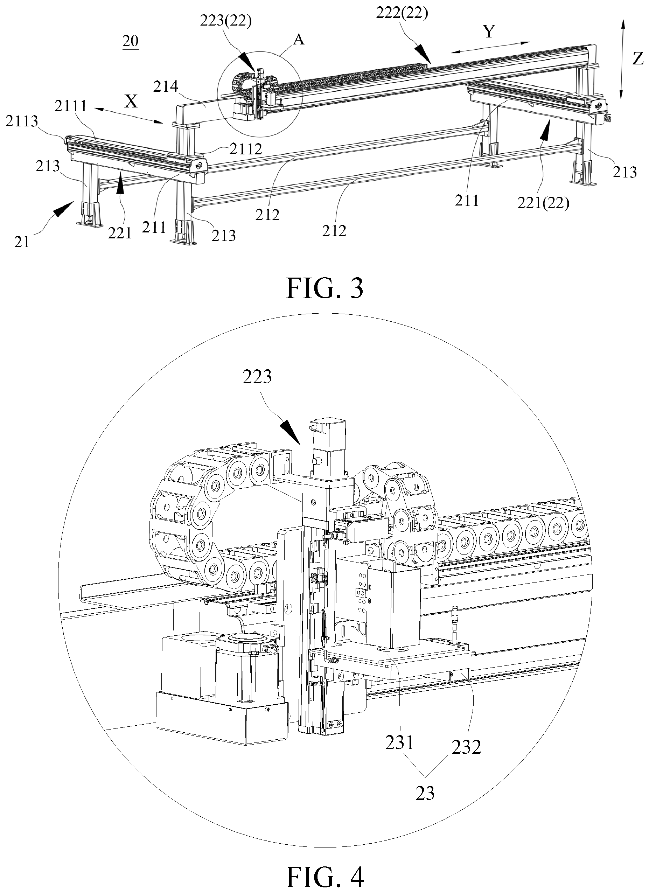

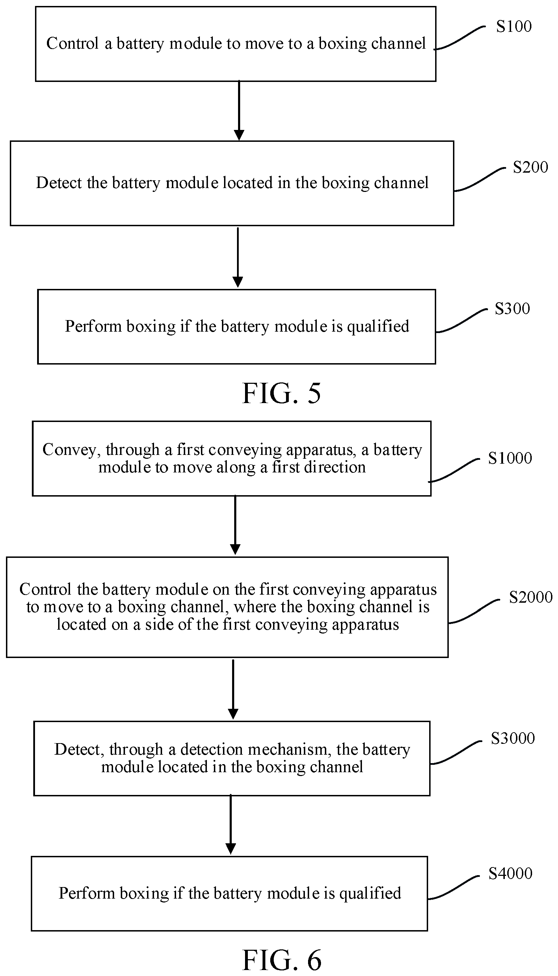

FIG. 1 is a schematic structural diagram of a boxing device according to some embodiments of the present disclosure; FIG. 2 is a partial schematic diagram of the boxing device shown in FIG. 1; FIG. 3 is a schematic structural diagram of a detection mechanism according to some embodiments of the present disclosure; FIG. 4 is a partially enlarged view of a position A in FIG. 3; FIG. 5 is a schematic method diagram of a boxing method according to some embodiments of the present disclosure; and FIG. 6 is a schematic method diagram of a boxing method according to some other embodiments of the present disclosure.

In some embodiments of the present disclosure, for convenience of description, a first direction, a second direction, and a third direction are set. The first direction, the second direction, and the third direction are directions intersecting each other. Here, intersecting each other includes intersecting perpendicularly each other. To facilitate understanding of the embodiments of the present disclosure, in the embodiments shown in FIG. 1 to FIG. 6, descriptions are provided by using an example in which the first direction, the second direction, and the third direction are perpendicular to each other. However, a person skilled in the art should understand that the embodiments of the present disclosure are not limited to the case in which the three directions are perpendicular to each other.

Referring to FIG. 1 to FIG. 3, the embodiments of the present disclosure provide a boxing device 100. The boxing device 100 is configured to box a battery module. The boxing device 100 includes a first conveying apparatus 10, a boxing channel 30, and a detection mechanism 20. The first conveying apparatus 10 is configured to convey a battery module to move along a first direction. The boxing channel 30 is arranged on a side of the first conveying apparatus 10. The battery module on the first conveying apparatus 10 is movable to the boxing channel 30 for boxing. The detection mechanism 20 is configured to detect the battery module located in the boxing channel 30, to match the battery module with a box 200 of a battery.

In the embodiments of the present disclosure, the so-called "boxing" refers to installing a battery module into the box 200 of the battery. The interior of the box 200 is of a hollow structure, and a plurality of battery modules are accommodated in the box 200. For example, the plurality of battery modules are connected in series, in parallel, or in series-parallel, and are then placed in the box 200. The boxing device 100 according to the embodiments of the present disclosure is an apparatus that can implement actions of boxing a battery module.

The boxing device 100 according to embodiments of the present disclosure is described with reference to the accompanying drawings. As shown in FIG. 1 to FIG. 3, the boxing device 100 includes a first conveying apparatus 10, a boxing channel 30, and a detection mechanism 20. The boxing channel 30 is arranged on a side of the first conveying apparatus 10. FIG. 1 shows the first conveying apparatus 10, the boxing channel 30, and the detection mechanism 20. For ease of observation, some components are omitted from illustration.

For example, as shown in FIG. 1 and FIG. 2, the first conveying apparatus 10 is configured to convey a battery module, and is configured to convey the battery module to the boxing channel 30.

For example, the boxing device 100 may carry the battery module through a tray. For example, the tray may flow from a previous procedure to the first conveying apparatus 10 of the boxing device 100 through a conveying belt.

The boxing channel 30 is arranged on a side of the first conveying apparatus 10. The battery module on the first conveying apparatus 10 is movable to the boxing channel 30 for boxing. For example, the tray flowing to the first conveying apparatus 10 may be lifted by driving a jacking holder by a jacking apparatus, so that the tray is moved from the first conveying apparatus 10 to the boxing channel 30 for boxing.

The first conveying apparatus 10 may include a conveying line, configured to convey a tray. The boxing channel 30 may also include a conveying line, configured to convey a tray. The conveying line of the first conveying apparatus 10 may convey a to-be-boxed battery module to the proximity of the boxing channel 30. The tray carrying a battery module is lifted by driving the jacking holder by the jacking apparatus, so that the tray is moved from the first conveying apparatus 10 to the boxing channel 30.

For example, the conveying line may be a conveying belt, for example, a belt-like object such as a belt, may be a plurality of rollers arranged side by side, or may be a plurality of chains.

The tray is an apparatus for holding a battery module, and includes at least a bottom plate. The trays may also be arranged along the first direction and/or the second direction.

The detection mechanism 20 is configured to detect the battery module located in the boxing channel 30. In this way, an identification function may be performed on the battery module before boxing, to make the battery module correspond to the box 200 of the battery, thereby avoiding the problem of incorrect installation of the battery module.

The boxing device 100 according to the embodiments of the present disclosure can quickly and accurately box a battery module in an automated manner, which saves labor costs and improves boxing efficiency. In addition, the detection mechanism 20 is configured to detect the battery module located in the boxing channel 30, for example, an identification function can be implemented on the battery module before boxing, to match the battery module with the box 200 of the battery, that is, to make the battery module correspond to the box 200 of the battery, thereby avoiding the problem of incorrect installation of the battery module. Therefore, whether the battery module matches the box 200 of the battery does not need to be manually confirmed, which is conducive to improving production efficiency and the degree of automation. In addition, the first conveying apparatus 10, the boxing channel 30, the detection mechanism 20, and the like may be configured to adapt to battery modules of different arrangement forms or types, thereby improving universality of the boxing device 100, and helping to suppress production costs.

In some implementations, referring to FIG. 2, the boxing channel 30 includes a first region 30a and a second region 30b that are arranged along a second direction. The first region 30a is configured to buffer the battery module. The battery module can be moved through the first region 30a to the second region 30b, for boxing. The detection mechanism 20 is configured to detect the battery module located in the second region 30b. The first direction intersects the second direction.

The first direction is the X direction in FIG. 1 and FIG. 2, and the second direction is the Y direction in FIG. 1 and FIG. 2.

It should be noted that a quantity of battery modules that can be buffered in the first region 30a is not limited herein, and one battery module may be buffered, or a plurality of battery modules may be buffered. For example, 2, 3, 4, 5, 6, 7, 8, 9, or 10 battery modules or the like may be buffered.

For example, the first region 30a can buffer six battery modules. In this way, the first region 30a is configured to buffer six battery modules, to quickly and accurately box the battery modules, thereby improving the production pace. In addition, the problem that the first region 30a occupies a large space due to too many buffered battery modules can be further avoided to some extent, thereby improving structural compactness.

The boxing channel 30 includes a first region 30a and a second region 30b that are arranged along a second direction. The first region 30a is, for example, a buffer region, and the second region 30b is, for example, a boxing region. The first region 30a is arranged close to the first conveying apparatus 10. In this way, a battery module on the first conveying apparatus 10 can be moved to the first region 30a and buffered in the first region 30a. The second region 30b is a side of the boxing channel 30 away from the first conveying apparatus 10. Battery modules in the first region 30a continuously enter the second region 30b for boxing, and cooperate with each other in an action time sequence, so that the battery modules are quickly and accurately boxed in an automated manner, thereby improving a production pace.

In some implementations, referring to FIG. 3 and FIG. 4, the detection mechanism 20 includes a first detection unit 231. The first detection unit 231 is configured to detect an end plate of the battery module.

The first detection unit 231 is, for example, a camera, and the camera can be configured to identify some features on the end plate.

Certainly, the first detection unit 231 may alternatively be another detection unit, provided that the first detection unit 231 can identify the features on the end plate.

The features on the end plate include, but are not limited to, shapes, positions, and/or sizes of holes, protrusions, or other identification features on the end plate, and certainly, may alternatively be differences in terms of the shape, position, and/or size of the end plate.

For example, shapes, positions, and/or sizes of holes that are on the end plate and that correspond to positive and negative terminals of the battery module may be set to be inconsistent. The shapes, positions, and/or sizes of the holes on the end plate of the battery module are detected by using the first detection unit 231, to make the battery module correspond to the box 200 of the battery. That is, error-proofing and fool-proofing measures are taken on the battery module and the box 200, to avoid the problem of incorrect installation of the battery module, which is conducive to improving production efficiency.

Avoiding incorrect installation of the battery module includes avoiding that the battery module does not correspond to requirements of the box 200, and includes avoiding reverse installation of positive and negative electrodes of the battery module.

In some implementations, referring to FIG. 4, the first detection unit 231 is configured to identify module information of the battery module.

For example, a two-dimensional code is formed on the battery module, or a two-dimensional code is formed on a battery core of the battery module, and the first detection unit 231 scans and identifies the two-dimensional code, to obtain module information of the battery module.

By setting the first detection unit 231, compatibility with a plurality of types of battery modules is implemented, and module information verification actions are completed at a high pace.

In this way, the first detection unit 231 is configured to identify module information of the battery module, to obtain the module information of the battery module, and it may be confirmed, according to the module information, whether the battery module corresponds to the box 200 of the battery, to take error-proofing and fool-proofing measures on the battery module and the box 200.

In some implementations, referring to FIG. 4, the detection mechanism 20 includes a second detection unit 232. The second detection unit 232 is configured to perform distance measurement on the battery module.

The second detection unit 232 is, for example, a distance meter. The distance meter can be configured to perform distance measurement on each battery core, to ensure that flatness of the battery module falls within an acceptable range.

Certainly, the second detection unit 232 may alternatively be another detection unit, provided that the second detection unit 232 can perform distance measurement on the battery core of the battery module.

The flatness of the battery module means that a height difference between battery cores forming the battery module falls with within an acceptable range. For example, heights of the battery cores are measured, and then the heights of the heights between the battery cores are compared to obtain a height difference.

For example, that the height difference is not more than 1 mm is considered acceptable.

For example, the heights of the battery cores may be measured by a distance meter at a temperature of 25°C.

A distance meter is configured to perform distance measurement on a battery core of the battery module, to ensure that flatness of the battery module falls within an acceptable range. In this way, standards, such as sizes, of battery modules of a battery pack can be kept as uniform as possible, to improve quality and performance of the battery pack.

In some implementations, referring to FIG. 1, there are a plurality of boxing channels 30, and the boxing channels 30 are arranged along the first direction.

The boxing channels 30 are arranged along the first direction. To be specific, the boxing channels 30 are arranged along a conveying direction of a battery module on the first conveying apparatus 10. In this way, it helps the battery module on the first conveying apparatus 10 to move to the boxing channel 30.

A plurality of the boxing channels 30 are provided, and are arranged along the first direction. In this way, battery modules can be simultaneously boxed through the plurality of boxing channels 30, thereby improving production efficiency. The plurality of boxing channels 30 may be configured for boxing battery modules of a same type, or may be configured for boxing battery modules of different types. In addition, when one of the boxing channels 30 is abnormal, boxing may also be performed through other normal boxing channels 30, thereby improving reliability of the boxing device 100.

It should be noted that the boxing channel 30 may include at least two sub-channels that are arranged side by side. That is, battery modules are simultaneously boxed through the at least two sub-channels that are arranged side by side.

In some implementations, referring to FIG. 1, the boxing channel 30 includes an automatic boxing channel 30c and at least one manual boxing channel 30d.

The automatic boxing channel 30c is configured to automatically box the battery module. For example, a boxing mechanism 40 is arranged, where the boxing mechanism 40 can box a battery module that is qualified through detection, thereby improving automation and production efficiency.

The manual boxing channel 30d is configured to manually control boxing of a battery module. For example, by arranging a manual hoisting station, boxing of a battery module that is qualified through detection is manually controlled.

That the boxing channel 30 includes at least one manual boxing channel 30d means that the boxing channel 30 may include one manual boxing channel 30d, or may include a plurality of manual boxing channels 30d.

In a specific embodiment, referring to FIG. 1, the boxing channel 30 includes three automatic boxing channels 30c and one manual boxing channel 30d.

By setting the boxing channels 30 to include an automatic boxing channel 30c and at least one manual boxing channel 30d, that is, by laying out both the automatic boxing channel 30c and the manual boxing channel 30d, when the boxing device 100 or the automatic boxing channel 30c is abnormal, it can be ensured, through the manual boxing channel 30d, that the production line is not stopped even if the boxing device is shut down, thereby improving production efficiency, and a plurality of different modules may be boxed simultaneously.

It should be noted that a quantity of detection mechanisms 20 is not limited herein.

In some implementations, a plurality of detection mechanisms 20 re provided, and the detection mechanisms 20 are in a one-to-one correspondence with the boxing channels 30.

In this way, the detection mechanisms 20 are in a one-to-one correspondence with the boxing channels 30, which is conducive to implementing compatibility with a plurality of types of battery modules, and completing module information verification and detection actions at a high pace.

In some implementations, referring to FIG. 1 and FIG. 2, the boxing device 100 further includes a boxing mechanism 40. The boxing mechanism 40 is configured to box a battery module that is qualified through detection.

By arranging a boxing mechanism 40, to implement precise positioning and clamping of the battery module, during boxing, precise boxing can be implemented, thereby simplifying a process of boxing a battery module, reducing labor costs, and improving accuracy and safety of boxing of a battery module.

In some implementations, referring to FIG. 1 and FIG. 2 again, the boxing device 100 further includes a second conveying apparatus 50, configured to recycle a tray. That is, after a battery modules on a tray in the boxing channel 30 is boxed, the empty tray enters the second conveying apparatus 50, and the second conveying apparatus 50 conveys the empty tray to a recycling region for recycling the tray.

Referring to FIG. 1 to FIG. 4, some embodiments of the present disclosure provide a detection mechanism 20. The detection mechanism 20 is used as a component of the boxing device 100 according to any embodiment of the present disclosure. The detection mechanism 20 includes a mounting bracket 21, a detection module 23, and a motion mechanism 22. The detection module 23 is configured to detect a battery module. The motion mechanism 22 is arranged on the mounting bracket 21. The motion mechanism 22 is configured to drive the detection module 23 to move.

The detection mechanism 20 can automatically detect the battery module through a controller, and the detection mechanism 20 may be adjusted according to a requirement. The adjustment is simple, and the detection operation can be implemented for all battery modules of different sizes and forms, so that the automation degree of the boxing device 100 is higher, and the production efficiency is higher.

The specific structure of the detection mechanism 20 is described below in further detail with reference to the accompanying drawings.

For example, as shown in FIG. 3 and FIG. 4, the motion mechanism includes 22 a first motion component 221, a second motion component 222, and a third motion component 223, the first motion component 221 is arranged on the mounting bracket 21, the first motion component 221 is configured to drive the second motion component 222 to move along a first direction, the second motion component 222 is configured to drive the third motion component 223 to move along a second direction, and the third motion component 223 is configured to drive the detection module 23 to move along a third direction, where the first direction, the second direction, and the third direction intersect each other.

In some implementations, the first direction, the second direction, and the third direction are perpendicular to each other.

The first direction is the X direction in FIG. 3, the second direction is the Y direction in FIG. 3, and the second direction is the Z direction in FIG. 3.

The mounting bracket 21 includes two horizontal frames 211 extending along the first direction, two first longitudinal frames 212 extending along the second direction, and four vertical frames 213 extending along the third direction. Two sides of each vertical frame 213 are each connected to a horizontal frame 211. Two ends of the first longitudinal frame 212 are respectively connected to the vertical frame 213. A rack side slide rail is provided on each of the two horizontal frames 211. The first motion component 221 includes a first drive apparatus 2213, a second drive apparatus, and a first slide rail 2211 and a second slide rail that extend along the first direction. The first slide rail 2211 and the second slide rail are respectively arranged on the two horizontal frames 211. The first motion component 221 further includes a first slide table 2212 that slidably cooperates with the first slide rail 2211 and a second slide table that slidably cooperates with the second slide rail. The first motion component 221 further includes a first screw rod engaged with the first slide table 2212 and a second screw rod engaged with the second slide table. For example, the first screw rod and the second screw rod are spaced apart in parallel in the second direction. The first screw rod and the second screw rod are respectively connected to an output end of a first drive apparatus 2213 and an output end of a second drive apparatus. Driven by the first drive apparatus 2213, the first screw rod drives, through rotation, the first slide table 2212 to slide along the first slide rail 2211. Driven by the second drive apparatus, the second screw rod drives, through rotation, the second slide table to slide along the second slide rail. For example, the first motion component 221 may further include a gear and a rack.

The mounting bracket 21 includes a second longitudinal frame 214 extending along the second direction. The second motion component 222 includes a third drive apparatus, a third slide table, a third slide rail extending along the second direction, and a third screw rod. The third slide rail is arranged on the second longitudinal frame 214. The third slide table slidably cooperates with the third slide rail. For example, the third screw rod is connected to an output end of the third drive apparatus. Driven by the third drive apparatus, the third screw rod drives, through rotation, the third slide table to slide along the third slide rail.

The third motion component 223 includes a fourth drive apparatus. For example, the detection module 23 is connected to an output of the fourth drive apparatus. The fourth drive apparatus is configured to drive the detection module 23 to move along the third direction.

For example, the first drive apparatus 2213, the second drive apparatus, the third drive apparatus, and the fourth drive apparatus include, but are not limited to, motors. In a specific example, for example, servo motors may be used.

Specific types of the first motion component 221, the second motion component 222, and the third motion component 223 are not limited, and are, for example, a synchronous belt linear module, a ball screw linear module, a linear motor, and a slide cylinder.

The motion mechanism 22 is equipped with the first motion component 221, the second motion component 222, and the third motion component 223. The first motion component 221 is configured to drive the second motion component 222 to move along the first direction, the second motion component 222 is configured to drive the third motion component 223 to move along the second direction, and the third motion component 223 is configured to drive the detection module 23 to move along the third direction. In this way, the detection module 23 may be adjusted in a plurality of directions according to a requirement, to implement adjustment at various angles, thereby satisfying a detection requirement. Adjustment of the detection module 23 is simple, and the detection operation can be implemented for all battery modules of different sizes and forms, so that the automation degree of the boxing device 100 is higher, and the production efficiency is higher.

According to a third aspect of the present disclosure, a battery production line is provided. The battery production line includes at least one boxing device 100 according to any one of the foregoing embodiments.

According to a fourth aspect of the present disclosure, a boxing method is provided, for boxing a battery module. Referring to FIG. 5, the boxing method includes:
Step S100: Control a battery module to move to a boxing channel.
Step S200: Detect the battery module located in the boxing channel.
Step S300: Perform boxing if the battery module is qualified.

In step S100, for example, the battery module may be conveyed by the first conveying apparatus 10 to move along the first direction, to enable the battery module to move to the boxing channel 30.

In step S200, the battery module located in the boxing channel 30 is detected by the detection mechanism 20. In this way, an identification function may be performed on the battery module before boxing, to make the battery module correspond to the box 200 of the battery, thereby avoiding the problem of incorrect installation of the battery module.

In step S300, the battery module is boxed if the battery module is qualified, to avoid the problem of incorrect installation of the battery module, which is conducive to improving production efficiency.

Therefore, by using the boxing device 100, a battery module can be quickly and accurately boxed in an automated manner, which saves labor costs and improves boxing efficiency. In addition, the detection mechanism 20 is configured to detect the battery module located in the boxing channel 30, for example, an identification function can be implemented on the battery module before boxing, to make the battery module correspond to the box 200 of the battery, thereby avoiding the problem of incorrect installation of the battery module, which is conducive to improving production efficiency and the degree of automation. In addition, the first conveying apparatus 10, the boxing channel 30, the detection mechanism 20, and the like may be configured to adapt to battery modules of different arrangement forms or types, thereby improving universality of the boxing device 100, and helping to suppress production costs.

According to a fifth aspect of the present disclosure, a boxing method is provided, for boxing a battery module by using a boxing device 100. Referring to FIG. 1 to FIG. 4, the boxing device 100 includes a first conveying apparatus 10, a boxing channel 30, and a detection mechanism 20.

Referring to FIG. 6, the boxing method includes:
Step S1000: Convey, through the first conveying apparatus, a battery module to move along a first direction.
Step S2000: Control the battery module on the first conveying apparatus to move to the boxing channel. The boxing channel is located on a side of the first conveying apparatus.
Step S3000: Detect, through the detection mechanism, the battery module located in the boxing channel.
Step S4000: Perform boxing if the battery module is qualified.

Therefore, by using the boxing device 100, a battery module can be quickly and accurately boxed in an automated manner, which saves labor costs and improves boxing efficiency. In addition, the detection mechanism 20 is configured to detect the battery module located in the boxing channel 30, for example, an identification function can be implemented on the battery module before boxing, to make the battery module correspond to the box 200 of the battery, thereby avoiding the problem of incorrect installation of the battery module, which is conducive to improving production efficiency and the degree of automation. In addition, the first conveying apparatus 10, the boxing channel 30, the detection mechanism 20, and the like may be configured to adapt to battery modules of different arrangement forms or types, thereby improving universality of the boxing device 100, and helping to suppress production costs.

In some embodiments, referring to FIG. 2, the boxing channel 30 includes a first region 30a and a second region 30b that are arranged along a second direction. The step of controlling the battery module on the first conveying apparatus 10 to move to the boxing channel 30 includes:
Step S2001: Control the battery module on the first conveying apparatus to move to the first region, to buffer the battery module.
Step S2002: Control the battery module in the first region to move to the second region, for boxing.

The boxing channel 30 is set to include a first region 30a and a second region 30b that are arranged along a second direction. The first region 30a is, for example, a buffer region, and the second region 30b is, for example, a boxing region. The first region 30a is arranged close to the first conveying apparatus 10. In this way, a battery module on the first conveying apparatus 10 can be moved to the first region 30a and buffered in the first region 30a. The second region 30b is a side of the boxing channel 30 away from the first conveying apparatus 10. Battery modules in the first region 30a continuously enter the second region 30b for boxing, and cooperate with each other in an action time sequence, so that the battery modules are quickly and accurately boxed in an automated manner, thereby improving a production pace.

In step S2001, the tray flowing to the first conveying apparatus 10, for example, may be lifted by driving a jacking holder by a jacking apparatus, so that the tray is moved from the first conveying apparatus 10 to the boxing channel 30 for boxing.

The first conveying apparatus 10 may include a conveying line, configured to convey a tray. The boxing channel 30 may also include a conveying line, configured to convey a tray. The conveying line of the first conveying apparatus 10 may convey a to-be-boxed battery module to the proximity of the boxing channel 30. The tray carrying a battery module is lifted by driving the jacking holder by the jacking apparatus, so that the tray is moved from the first conveying apparatus 10 to the boxing channel 30.

The first region 30a is configured to buffer the battery module. It should be noted that a quantity of battery modules that can be buffered in the first region 30a is not limited herein, and one battery module may be buffered, or a plurality of battery modules may be buffered. For example, 2, 3, 4, 5, 6, 7, 8, 9, or 10 battery modules or the like may be buffered.

In some embodiments, the detecting the battery module located in the boxing channel 30 by using the detection mechanism 20 includes: detecting, through the detection mechanism 20, the battery module located in the second region 30b.

The second region 30b is a side of the boxing channel 30 away from the first conveying apparatus 10. Battery modules in the first region 30a continuously enter the second region 30b for boxing, and the battery modules located in the second region 30b are detected through the detection mechanism 20 and cooperate with each other in an action time sequence, so that the battery modules are quickly and accurately boxed in an automated manner, thereby improving a production pace.

In some embodiments, the detecting the battery module located in the boxing channel 30 by using the detection mechanism 20 includes: detecting, through the detection mechanism 20, an end plate of the battery module.

Referring to FIG. 3 and FIG. 4, the detection mechanism 20 includes, for example, a camera, and the camera can be configured to identify some features on the end plate.

Certainly, the detection mechanism 20 may alternatively be another detection unit, provided that the first detection unit 231 can identify the features on the end plate.

The features on the end plate include, but are not limited to, shapes, positions, and/or sizes of holes, protrusions, or other identification features on the end plate, and certainly, may alternatively be differences in terms of the shape, position, and/or size of the end plate.

For example, shapes, positions, and/or sizes of holes that are on the end plate and that correspond to positive and negative terminals of the battery module may be set to be inconsistent. The shapes, positions, and/or sizes of the holes on the end plate of the battery module are detected by using the first detection unit 231, to make the battery module correspond to the box 200 of the battery. That is, error-proofing and fool-proofing measures are taken on the battery module and the box 200, to avoid the problem of incorrect installation of the battery module, which is conducive to improving production efficiency.

Avoiding incorrect installation of the battery module includes avoiding that the battery module does not correspond to requirements of the box 200, and includes avoiding reverse installation of positive and negative electrodes of the battery module.

In some embodiments, referring to FIG. 3 and FIG. 4, module information of the battery module is identified through the detection mechanism 20.

For example, a two-dimensional code is formed on the battery module, or a two-dimensional code is formed on a battery core of the battery module, and the detection mechanism 20 scans and identifies the two-dimensional code, to obtain module information of the battery module.

By setting the detection mechanism 20, compatibility with a plurality of types of battery modules is implemented, and module information verification actions are completed at a high pace.

In this way, the detection mechanism 20 is configured to identify module information of the battery module, to obtain the module information of the battery module, and it may be confirmed, according to the module information, whether the battery module corresponds to the box 200 of the battery, to take error-proofing and fool-proofing measures on the battery module and the box 200.

In some embodiments, referring to FIG. 3 and FIG. 4, distance measurement is performed on the battery module through the detection mechanism 20.

The detection mechanism 20 is, for example, a distance meter. The distance meter can be configured to perform distance measurement on each battery core, to ensure that flatness of the battery module falls within an acceptable range.

Certainly, the detection mechanism 20 may alternatively be another detection unit, provided that the second detection unit 232 can perform distance measurement on the battery core of the battery module.

The flatness of the battery module means that a height difference between battery cores forming the battery module falls with within an acceptable range. For example, heights of the battery cores are measured, and then the heights of the heights between the battery cores are compared to obtain a height difference.

For example, that the height difference is not more than 1 mm is considered acceptable.

For example, the heights of the battery cores may be measured by a distance meter at a temperature of 25°C.

A distance meter is configured to perform distance measurement on a battery core of the battery module, to ensure that flatness of the battery module falls within an acceptable range. In this way, standards, such as sizes, of battery modules of a battery pack can be kept as uniform as possible, to improve quality and performance of the battery pack.

In some embodiments, referring to FIG. 1 and FIG. 2, the boxing device further includes a boxing mechanism 40. The performing boxing includes: boxing, through the boxing mechanism 40, a battery module that is qualified through detection.

By arranging a boxing mechanism 40, to implement precise positioning and clamping of the battery module, during boxing, precise boxing can be implemented, thereby simplifying a process of boxing a battery module, reducing labor costs, and improving accuracy and safety of boxing of a battery module.

The above embodiments are merely intended for describing the technical solutions of the present disclosure rather than limiting the present disclosure. Although the present disclosure is described in detail with reference to the foregoing embodiments, a person of ordinary skill in the art shall understand that, modifications may still be made to the technical solutions in the foregoing embodiments, or equivalent replacements may be made to some or all of the technical features. These modifications or replacements do not make the essence of the corresponding technical solutions detract from the scope of the technical solutions of the embodiments of the present disclosure, and are intended to be included within the scope of the present disclosure. In particular, the various technical features mentioned in the various embodiments can be combined in any way provided that there is no structural conflict. The present disclosure is not limited to the specific embodiments disclosed in the present disclosure, but includes all technical solutions falling within the scope of the present disclosure.

### Industrial applicability

The boxing device according to the embodiments of the present disclosure can quickly and accurately box a battery module in an automated manner, which saves labor costs and improves boxing efficiency. In addition, the detection mechanism is configured to detect the battery module located in the boxing channel, for example, an identification function can be implemented on the battery module before boxing, to match the battery module with the box of the battery, that is, to make the battery module correspond to the box of the battery, thereby avoiding the problem of incorrect installation of the battery module. Therefore, whether the battery module matches the box of the battery does not need to be manually confirmed, which is conducive to improving production efficiency and the degree of automation. In addition, the first conveying apparatus, the boxing channel, the detection mechanism, and the like may be configured to adapt to battery modules of different arrangement forms or types, thereby improving universality of the boxing device, and helping to suppress production costs.

## Claims

1. A boxing device, configured to box a battery module, and comprising:
a first conveying apparatus, configured to convey a battery module to move along a first direction;
a boxing channel, arranged on a side of the first conveying apparatus, wherein the battery module on the first conveying apparatus is movable to the boxing channel for boxing; and
a detection mechanism, configured to detect the battery module located in the boxing channel, to match the battery module with a box of a battery.

2. The boxing device according to claim 1, wherein the boxing channel comprises a first region and a second region that are arranged along a second direction, wherein the first region is configured to buffer the battery module, and the battery module is movable through the first region to the second region for boxing, and the detection mechanism is configured to detect the battery module located in the second region, wherein the first direction intersects the second direction.

3. The boxing device according to claim 1 or 2, wherein the detection mechanism comprises a first detection unit, wherein the first detection unit is configured to detect an end plate of the battery module; and/or the first detection unit is configured to identify module information of the battery module.

4. The boxing device according to any one of claims 1 to 3, wherein the detection mechanism comprises a second detection unit, wherein the second detection unit is configured to perform distance measurement on the battery module.

5. The boxing device according to any one of claims 1 to 4, wherein a plurality of boxing channels are provided, and the boxing channels are arranged along the first direction.

6. The boxing device according to claim 5, wherein the boxing channels comprise an automatic boxing channel and at least one manual boxing channel.

7. The boxing device according to claim 5 or 6, wherein a plurality of detection mechanisms are provided, and the detection mechanisms are in a one-to-one correspondence with the boxing channels.

8. The boxing device according to any one of claims 1 to 7, wherein the boxing device further comprises a boxing mechanism, wherein the boxing mechanism is configured to box a battery module that is qualified through detection.

9. A detection mechanism, wherein the detection mechanism is used as a component of the boxing device according to any one of claims 1 to 8, and the detection mechanism comprises:
a mounting bracket;
a detection module, configured to detect a battery module; and
a motion mechanism, arranged on the mounting bracket, wherein the motion mechanism is configured to drive the detection module to move.

10. The detection mechanism according to claim 9, wherein the motion mechanism comprises a first motion component, a second motion component, and a third motion component, the first motion component is arranged on the mounting bracket, the first motion component is configured to drive the second motion component to move along a first direction, the second motion component is configured to drive the third motion component to move along a second direction, and the third motion component is configured to drive the detection module to move along a third direction, wherein the first direction, the second direction, and the third direction intersect each other.

11. A battery production line, comprising at least one boxing device according to any one of claims 1 to 8.

12. A boxing method, for boxing a battery module, comprising:
controlling the battery module to move to a boxing channel;
detecting the battery module located in the boxing channel; and
performing boxing if the battery module is qualified.

13. A boxing method, for boxing a battery module by using a boxing device, wherein the boxing device comprises a first conveying apparatus, a boxing channel, and a detection mechanism, and the boxing method comprises:
conveying, through the first conveying apparatus, the battery module to move along a first direction;
controlling the battery module on the first conveying apparatus to move to the boxing channel, wherein the boxing channel is located on a side of the first conveying apparatus;
detecting the battery module located in the boxing channel by using the detection mechanism; and
performing boxing if the battery module is qualified.

14. The boxing method according to claim 13, wherein the boxing channel comprises a first region and a second region that are arranged along a second direction, wherein the step of controlling the battery module on the first conveying apparatus to move to the boxing channel comprises:
controlling the battery module on the first conveying apparatus to move to the first region, to buffer the battery module; and
controlling the battery module in the first region to move to the second region, for boxing.

15. The boxing method according to claim 14, wherein the detecting the battery module located in the boxing channel by using the detection mechanism comprises:
detecting the battery module located in the second region by using the detection mechanism.

16. The boxing method according to any one of claims 13 to 15, wherein the detecting the battery module located in the boxing channel by using the detection mechanism comprises:
detecting an end plate of the battery module by using the detection mechanism; and/or
identifying module information of the battery module by using the detection mechanism; and/or
performing distance measurement on the battery module by using the detection mechanism.

17. The boxing method according to any one of claims 13 to 16, wherein the boxing device further comprises a boxing mechanism, and the performing boxing comprises: boxing, by using the boxing mechanism, the battery module that is qualified through detection.
